(19)

Europäisches
Patentamt
European
Patent Office
Office européen
des brevets

(11) **EP 1 738 524 B1**

(12) **EUROPEAN PATENT SPECIFICATION**

(45) Date of publication and mention
of the grant of the patent:
**08.08.2007 Bulletin 2007/32**

(21) Application number: **05738588.2**

(22) Date of filing: **20.04.2005**

(51) Int Cl.:
***H04L 12/26*** *(2006.01)*

(86) International application number:
**PCT/IB2005/001440**

(87) International publication number:
**WO 2005/104436 (03.11.2005 Gazette 2005/44)**

(54) **METHOD AND SYSTEM FOR GENERATING A POPULATION REPRESENTATIVE OF A SET OF USERS OF A COMMUNICATION NETWORK**

VERFAHREN UND SYSTEM ZUR ERZEUGUNG EINER FÜR EINE MENGE VON BENUTZERN EINES KOMMUNIKATIONSNETZES REPRÄSENTATIVEN POPULATION

PROCEDE ET SYSTEME DE FORMATION D'UNE POPULATION REPRESENTATIVE D'UN ENSEMBLE D'UTILISATEURS D'UN RESEAU DE COMMUNICATION

(84) Designated Contracting States:
**AT BE BG CH CY CZ DE DK EE ES FI FR GB GR HU IE IS IT LI LT LU MC NL PL PT RO SE SI SK TR**

(30) Priority: **22.04.2004 FR 0404271**

(43) Date of publication of application:
**03.01.2007 Bulletin 2007/01**

(73) Proprietor: **Weborama**
**75019 Paris (FR)**

(72) Inventor: **PARIS, Sunny**
**F-75011 Paris (FR)**

(74) Representative: **Texier, Christian et al**
**Cabinet Régimbeau**
**20, rue de Chazelles**
**75847 Paris cedex 17 (FR)**

(56) References cited:
**EP-A- 0 955 759**        **EP-A- 1 341 089**
**WO-A-02/33626**        **FR-A- 2 829 258**
**US-A1- 2004 019 518**

**Description**

The application field of this invention is the study of behavioural profiles of Internet users or users of any other communication network.

The invention more particularly relates to a method and system for assuring that a known and qualified user population is representative.

Internet service providers, including governing bodies, advertisers, e-traders, software publishers and more generally multimedia content distributors, would like to dynamically adapt the multimedia contents that they offer as a function of the profile of each Internet user in order to optimise their efficiency. For example, they would like to be able to display advertising banners to suit the profile of each Internet user who visits a site or to highlight different products depending on the type of Internet user.

Methods for determining the profile of an unknown Internet user (or profiling methods) are known that usually use a database containing information about known Internet users who are members of a so-called reference population.

Document WO 02/33626 provides an example of such a profiling method according to which a reference population made up of Internet users with known socio-demographic profiles is used to determine sets of discriminating URL addresses for a set of attributes (for example including age or sex). These sets of URL addresses thus determined can then be used to determine a score associated with each attribute for an unknown Internet user, this score being calculated as a function of the URL addresses that the unknown Internet user has viewed.

In general, the reference population includes volunteer Internet users who agree to provide profile information concerning them (for example such as age, sex, socio-professional category, centres of interest, family situation, etc.).

This reference population is thus qualified in that each of its members are associated with profile data.

For example, these Internet users may be recruited by telephone according to socio-demographic criteria considered to be representative of a global population (for example the population of Internet users in a country). A spyware and a cookie (or connection standard) may then be installed on the browsing station of each member of the reference Internet user population.

The cookie contains Internet user identification information.

The function of the spyware is to record browsing done by the Internet user, in other words the different sites or parts of sites that he also visits over a period of time. The spyware regularly transmits information about the browsing history of members of the reference population to a profiling system.

Note that it is also possible to ask users questions while they are browsing, so as to obtain socio-demographic type information concerning them.

Depending on the different websites visited by members of the reference population, the profiling system is then capable of statistically determining the profile of unknown Internet users who connect to a particular site of interest.

It will clearly be understood that high quality profiling is impossible unless there is a sufficiently large and statistically representative population of a set of qualified Internet users available (for example French Internet users, or Internet users using a browser in French, or Internet users connecting at night, etc.).

Representativeness assures that the behaviour of a known Internet user will correspond to the behaviour of unknown Internet users supposed to be represented by the known Internet user.

It is understandable that it is relatively easy to build up a qualified population, for example by asking Internet users questions while they are browsing or having them install software on their computer as mentioned earlier.

However, it is much more difficult to assure that the population concerned is representative.

There is a difference between the reference population composed of volunteer Internet users and the real population that it is supposed to represent.

Note that a population representing one Internet user out of n Internet users may be considered as being representative if, on average, one Internet user in this representative population makes one visit out of n visits to each site in a set of sites of interest.

In other words, on average, the percentage of user members of the representative population among the set of represented users who visited the site during a given time period is uniform on all sites of interest considered.

One purpose of the invention is to build up a representative population starting from any qualified population.

More specifically, another purpose of the invention is to assure that a reference population is representative starting from this single reference population, in particular without needing to do a framework study or to make use of profile data related to known users in the reference population.

To achieve this, according to a first aspect of the invention, the invention describes a method of generating a population representative of the behaviour of a set of users of a communication network starting from a reference population composed of known network users listed in a database, characterised in that it comprises steps consisting of :

- for each site or part of a site in a set of sites of interest accessible through the network, determining the number of users (N(s)) who connected to the said site or part of site (s) during a given time period (T), using a traffic analysis system connected to the network for analysing traffic on sites of interest;

- for each site or part of site (s), determining a theoretical number ($\widetilde{q}$(s)) of users such that the ratio between this theoretical number ($\widetilde{q}$(s)) of users and the number of users (N(s)) who connected to the said site (s) during the given time period (T) is uniform on all sites of interest;
- using processing means connected to the database to generate a population of known network users starting from the reference population so as to minimize the difference between the said theoretical number of users ($\widetilde{q}$(s)) and the number of users ($q_n$(s)) in the generated population who connected to the site (s) during the time period (T), on all sites or parts of site (s).

Note that the expression "part of sites" in this description means a page or a group of pages belonging to the same site and forming a thematic entity for application of the method.

The following aspects are preferred but non-limitative aspects of the method according to the first aspect of the invention:

- weighting is associated with each known user in the reference population, during the step to generate the population of known network users starting from the reference population;
- the step to generate the population is performed iteratively as follows:

  - the weightings associated with users in the reference population are varied during each iteration;
  - for each iteration, the weightings thus varied are used to generate a new population starting from the reference population;
  - and for each iteration, on all site (s.) or parts of site (s), the difference between the said theoretical number ($\widetilde{q}$(s)) of users and the number ($q_n$(s)) of users in the new population thus generated who connected to the site (s) during the time period (T), is determined; the iterations being continued until the said difference is less than a given threshold, the population generated during the last iteration being considered to be representative of the behaviour of the said set of users.

- during each iteration, the new generated population is a sub-population of the reference population obtained by a random draw of users in the reference population in which the probability of drawing each user in the reference population is equal to the weighting associated with him, each Internet user thus drawn being counted in full in the generated population.
- during each iteration, the new generated population is a population with exactly the same size as the reference population in which the weight of each Internet user is-equal to the weighting associated with him.
- in each iteration, the weighting associated with a user in the reference population is increased if he has connected during a given time period to sites for which the number of users in the reference population who connected to it is less than the theoretical number, otherwise the weighting is reduced.
- the method includes a preliminary step to filter traffic data collected by the traffic analysis system, to only consider data related to all users for which a population representative of the behaviour needs to be generated.
  According to a second aspect, the invention also relates to a system for generating a population of users of a communication network representative of the behaviour of a set of network users starting from a reference population composed of known network users characterised in that it comprises:

  - a server that generates a representative population, is connected to the network and includes processing means connected to a database listing known users in the reference population,
  - a system connected to the traffic analysis network analysing traffic on sites of interest capable of determining for each site or part of site among all sites of interest accessible through the network, the total number of users who connected to the said site or part of site during a given time period, and discriminating which of these users are members of the reference population,

in which the processing means are capable of:

- for each site or part of site, generating a theoretical number of users such that the ratio between this theoretical number of users and the total number of users who connected to the said site during the given time period is uniform on all sites of interest,
- generating a population of known network users starting from the reference population so as to minimise the difference between the said theoretical number of users and the number of users in the generated population who connected to the site during the time period, for all sites or parts of site.

According to another aspect, the invention relates to a method for determining the profile of a user of a communication network comprising a step to generate a representative population starting from a reference population using the method according to the first aspect of the invention.

According to yet another aspect, the invention relates to a system for determining the profile of a user of a communication network including a system to generate a representative population according to the second aspect of the invention.

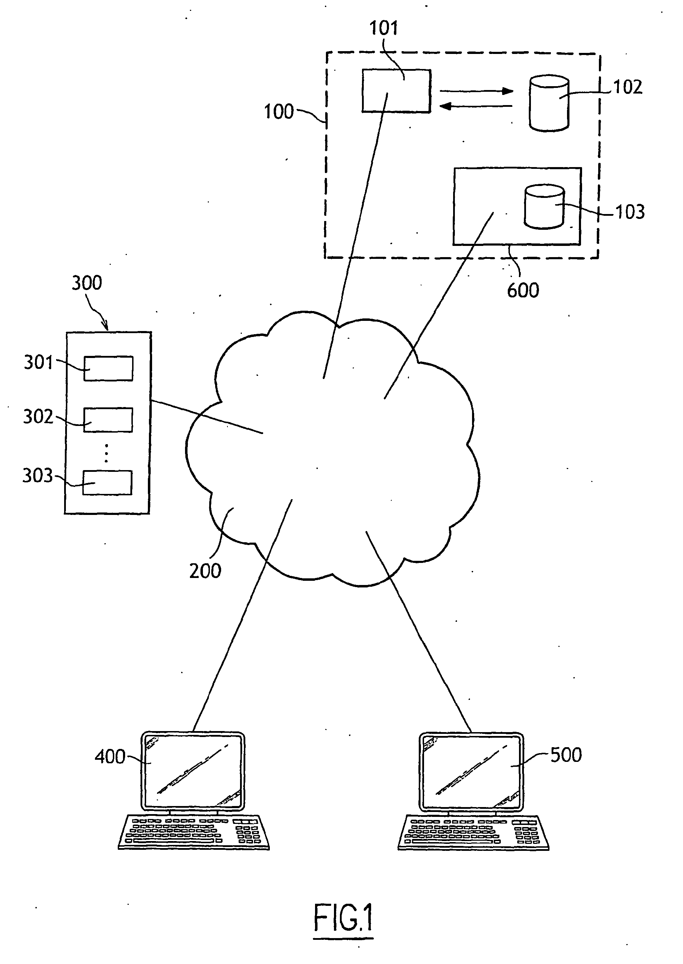

Other characteristics, purposes and advantages of the invention will become clear from the following description that is purely illustrative and is in no way limitative and should be read with reference to the single appended figure. This Figure 1 is a diagram representative of a system complying with one possible embodiment of the invention, for generating a population representative of the behaviour of a set of users of a communication network starting from a reference population composed of known users.

On the figure, the system 100 that generates a representative population starting from a reference population is connected to a communication network 200 (such as Internet) to which a set 300 of Web servers of interest 301, 302, 303 is connected.

Each Web server hosts a site or multimedia contents made available to users 400, 500 of the network 200 (the Internet users) through a service provider.

The system 100 for generating a representative population includes a processing server 101 connected to the network 200 and connected to a database 102 listing information related to members of a reference Internet user population 500.

This information includes profile data about the Internet user (typically his / her age, sex, socio-professional category, etc.), and information identifying the Internet user (such as a unique identifier).

The processing server 101 includes processing means capable of generating a population representative of the behaviour of a set of Internet users who connect to Web servers of interest 301 to 303, starting from the reference population composed of known and qualified Internet users 500 forming the reference population.

The system 100 to generate a representative population also includes a traffic analysis system 600 connected to the network 200 and provided with traffic measurement means for measuring traffic on all 300 sites of interest, and traffic data processing means.

This type of traffic analysis system 600 may for example be a page marking system according to which some pages of sites hosted by web servers 301 to 303 are marked by page markers. These markers are hosted by the traffic measurement system 600 such that when an Internet user accesses a Web page marked in this way, loading the marker will trigger sending a request to the traffic analysis system. This request informs the traffic measurement system that the Internet user is loading a given web page.

As a variant, this type of traffic analysis system 600 can also analyse log files (or connection logs) generated by Web servers 301 to 303 when an Internet user views a Web page on a site hosted by one of these servers 301 to 303.

The traffic analysis system 600 comprises a database 103 in which traffic data are recorded containing information about Internet users visiting Web pages of interest thus audited during a given period.

In particular, these traffic data include the Internet user's unique identifier, the site visited, the time of the visit, the IP address of the Internet user and his proxy, his connection speed, his time zone, languages used by his browser, and any other information that might be considered as being relevant.

The traffic analysis system 600 may also comprise means of filtering the collected traffic data so as to only consider a particular set of network users (such as - French Internet users, or Internet users using a browser in the French language, or Internet users connecting at night), for which it is required to have a representative population.

The traffic analysis system 600 can also cooperate with the database 102 listing Internet users in the reference population, particularly so as to determine which of the Internet users who visited one of the sites of interest forms part of the reference population.

It is thus possible to record every connection made by an Internet user to a site during a given time period, and to discriminate which Internet users are members of the reference population.

Within the scope of the invention, there is a reference population composed of known Internet users 500 starting from which it is required to generate a representative population of a set of users 400, 500 of the network 200.

Consequently, the traffic analysis system 600 determines the number N(s) of different Internet users who visited a site or part of site (s) within the 300 sites of interest during a given time period T.

The total number of Internet users on all sites of interest during the time period T considered is denoted N.

Obviously, according to one particular embodiment of the invention, Internet users are filtered so as to restrict the field of study to consider only Internet users in a particular population for which it is required to have a representative population (for example Internet users in a specific country, Internet users connecting at night, etc.).

As already mentioned, cooperation of the traffic analysis system 600 with the database 102 listing reference Internet users provides a means of distinguishing which of these N different Internet users form part of the reference population (the number is Q).

The proportion of known Internet users (members of the reference population) among all of the N Internet users visiting at least one site of interest during the time period T, is denoted $R = \dfrac{Q}{N}$.

The required representativeness ratio $\tilde{R}$ for the representative population to be generated is defined.

This ratio may be expressed using the formula $\tilde{R} = \dfrac{\tilde{Q}}{N}$, in other words as being representative of the proportion of Internet users in the representative population (including $Q$ Internet users) among all of the N Internet users visiting at least one site of interest during the time period T.

Note that for statistical purposes, it is obviously preferable to measure traffic on a large number of web sites of interest (for example 20 000 sites) and to have a sufficiently large reference population (for example 300 000 Internet users).

As already mentioned, a population representing one in n Internet users (representativeness ratio 1/n) may be considered as being representative if, on average, one out of n visits to each site is made by an Internet user in the said representative population.

Consequently, if a given population is representative, the ratio between the number of known users belonging to this given population who connect to each site or part of site s during the given time period T, and the total number of users who actually connect to this site, should be uniform for all sites of interest and should be equal to the representativeness ratio $\tilde{R}$.

Starting from the representativeness ratio R and the total number of users N(s) who connect to a particular site s during the time period considered, within the scope of the invention, a theoretical number $\tilde{q}(s)$ of users is generated for each site s such that the ratio between this theoretical number $\tilde{q}(s)$ of users and the total number of users N(s) who connected to the said site s during the given time period T is uniform on all sites of interest, in other words $\tilde{q}(s) = \tilde{R} * N(s)$.

The processing means of the server 101 used to generate a representative population are capable of generating a population of known network users starting from the reference population so as to minimise the difference between the said theoretical number $\tilde{q}(s)$ of users and the number $q_n(s)$ of users in the generated population who connected to the site (s) during the time period (T), on all sites or parts of site (s).

More precisely, according to one possible embodiment of the invention, the processing means of the server 101 for generating a representative population are capable of:

- determining a weighting to be associated with each known user in the reference population, and using these weightings to generate a population of known network users starting from the reference population,
- and -varying the weightings so as to minimize the difference between the number $q_n(s)$ of users in the generated population who connected to site (s) during the time period considered as determined by the traffic analysis system 600, and the theoretical number $q(s)$ of users, on all sites or parts of site.

The variation of the weightings and the resulting construction of a generated population are done more precisely by iteration in order to minimise the difference between the number of expected qualified Internet users (theoretical number) and the number of Internet users actually measured.

The following gives details of one possible embodiment of such an iterative generation of a representative population.

The method is initialised firstly by associating each known Internet user in the reference population with an identical initial weighting $p_1(i) = \dfrac{\tilde{R}}{R}$.

During a first operation in the iteration, a sub-population of the reference population is generated by making a random draw of a number $\tilde{Q} = \tilde{R} \times N$ of Internet users among the Q Internet users in the reference population who connected to at least one of the sites of interest during the time period considered, the probability of drawing each of the Internet users in the reference population being equal to the Internet user's weighting $p_n(i)$ (where n denotes the rank of the iteration). Each Internet user in this sub-population is counted in full.

According to one variant of the random draw and generation of a sub-population of the reference population, the first operation in the iteration consists of generating a population with exactly the same size as the reference population of Internet users who connected to at least one of the sites of interest during the time period considered (therefore including Q members) but in which each Internet user has a particular weight equal to his weighting $p_n(i)$.

The second operation in the iteration is to determine the number of different Internet users in the generated population who connected during the time period considered, for each site's.

Thus, if the generated population is a sub-population of the reference population including $\tilde{Q}$ Internet users in which each Internet user is counted in full, the $q_n(s)$ Internet users who connected to the site s are determined from among the $\tilde{Q}$ Internet users.

If the generated population is a population of Q Internet users in which the weighting of each Internet user, is considered, the number $q_n(s)$ of different Internet users in the generated population who connected to a site s during the given period is equal to the sum of weightings of Internet users in the reference population who actually connected to the site s.

As already mentioned, the objective is to build up a generated population of known Internet users such that the proportion of Internet users in this generated population is uniform on each site or part of site among all the sites of interest, and therefore the difference between the number $q_n(s)$ of Internet users in the generated population and the theoretical number $\tilde{q}$ for all sites of interest is minimised.

The difference measurement described in the following is the variance calculation, but it will be understood that any other difference measurement could be used (for example such as the Monte Carlo method).

The third operation in the iteration consists of determining a measured value of the difference from the representativeness of the generated population, for example the variance $v_n$ for iteration rank n expressed by

$$v_n = \sum_s (q_n(s) - \tilde{q}(s))^2 , \quad \text{and this difference measurement is compared with a threshold.}$$

If the difference measurement is greater than the fixed threshold, a fourth operation in the iteration is carried out in which new weightings to be associated with each Internet user in the reference population (including Q known Internet users) are determined so as to generate a new population of known Internet users for which the difference from representativeness is reduced.

In general, the weighting associated with an Internet user in the reference population is increased if this Internet user visited sites for which the number of qualified Internet users is less than the theoretical number during the time period considered, :and otherwise the weighting is reduced.

This is done by calculating a "centre of gravity" B(i) for each qualified Internet user i by summating the deviations b(s) for each site on which the Internet user i passed.

The deviation b(s) for a site s is defined as follows, depending on whether the number q(s) of known Internet users who visited the site s during the time period considered is greater than or less than the theoretical number $\tilde{q}(s)$ of Internet users:

$$b(s) = \frac{q_n(s)}{\tilde{q}(s)} - 1 \text{ if } q(s) \geq \tilde{q}(s) \text{ or } b(s) = 1 - \frac{\tilde{q}(s)}{q_n(s)}$$

if $q(s) < \tilde{q}(s)$ The centre of gravity B(i) is then calculated using the expression $B(i) = \sum_{s(i)} b(s)$, where s(i) represents sites visited by Internet user i during the period considered.

The weighting $p_n(i)$ associated with qualified Internet user i in iteration rank n is then determined as described in the following equations:

$$p_n(i) = p_{n-1}(i) \frac{1}{1 + \frac{B(i)}{S_i}} \text{ if } B(i) \geq 0 \text{ or } p_n(i) = p_{n-1}(i) \left(1 - \frac{B(i)}{S_i}\right)$$

if B(i) < 0, where $p_{n-1}(i)$ is the weighting associated with qualified Internet user i in iteration rank n-1, and $S_i$ is the number of sites visited by Internet user i during the time period considered.

The iteration operations are restarted using these new weightings and a new population is thus generated (as described before, either by random drawing of a sub-population in which each Internet user counts in full, or by considering the reference population as a whole but in which the weighting of each Internet user is taken into account), for which the difference from representativeness is evaluated.

The iterative method described above is thus implemented until a population is generated for which the difference (in this case the variance) is less than the fixed threshold.

Note that in the context of a population generated by random drawing of a sub-population of the reference population, it is possible to make the random draw several times with the same drawing probabilities. This makes it possible to perform the operations for one iteration using several sub-populations and then in particular to make several measurements of the difference from representativeness. In particular, it is thus possible to use the sub-population with the lowest difference measurement as a basis for the calculation of new weightings for the next iteration, which undoubtedly improves the precision and speed of generation of the representative population.

Obviously, it is clear that the representative population generated according to the invention is intended particularly for use in the context of a profiling method (and the system using the said profiling method) in which the profile of unknown Internet users is determined by comparing browsing of these unknown Internet users on sites of interest, with browsing of Internet users in the representative population.

In the context of such a profiling method, the profile of an Internet user may be composed of a series of values of attributes associated with this Internet user. The attributes consist of information associated with each Internet user, that is interesting to service providers. For example, these attributes may relate to sex, age and the socio-professional category of the Internet user.

The profile $P_i$ of a given Internet user i is expressed as a sequence including N values of attributes $p_{ij}$, where $p_{ij}$ is the probability that Internet user i has attribute j.

The profile of an Internet user i may thus be noted as follows:

$$P_i = (p_{i1}, p_{i2}, p_{i3}, p_{i4}, p_{i5}, p_{i6}, p_{i7}, p_{i8}, p_{i9}, p_{i10}, p_{i11}, p_{i12}, p_{i13}, ... PiN) \text{ where:}$$

- $p_n$ is the probability that Internet user i is a woman (j = 1),
- $p_{12}$ is the probability that Internet user i is a man (j = 2)
- $p_{i3}$, $p_{i4}$, $p_{i5}$, $p_{i6}$, $p_{i7}$, and $p_{i8}$ are probabilities that Internet user i is between 0 and 14 years old (j = 3), 15 to 24 years old (j = 4), 25 to 34 years old (j = 5), 35 to 49 years old (j j = 6), 50 to 64 years old (j = 7), or more than 65 years old (j = 8).
- $p_{i9}$, $p_{i10}$, $p_{i11}$, $p_{i12}$ and $p_{i13}$ are probabilities that Internet user i belongs to specific types of socio-professional categories (j = 9, 10, 11, 12 or 13),
- other attributes 14 to N are also taken into account.

The profile $P_s$ of a given Web site of interest s is expressed as a sequence also including N values of attributes $p_{sj}$, where $p_{sj}$ is the probability that an Internet user who visits the site s has attribute j.

The profile of a site s is thus noted:

$$Ps = (p_{s1}, p_{s2}, p_{s3}, p_{s4}, p_{s5}, p_{s6}, p_{s7}, p_{s8}, p_{s9}, p_{s10}, p_{s11}, p_{s12}, p_{s13}, ... p_{sN})$$

where the attribute values $p_{sj}$ of the profile $p_s$ are determined as a function of the values of attributes of Internet users in the representative population who visit site s.

For a given site of interest s, when the representative population is a sub-population of the reference population generated by a random draw-in which each Internet user counts in full, the value $p_{sj}$ of the attribute j is the average of the values $p_{ij}$ associated with Internet users in the representative population who visit the site s.

Alternately, for a given site of interest s, when the representative population is the reference population in which the weighting associated with each Internet user is taken into account, the value $p_{sj}$ of the attribute j is the average of the values $p_{ij}$ associated with Internet users in the representative population who visit the site s, in this case these values $p_{ij}$ being weighted by the weightings associated with the said Internet users.

Obviously, the invention is not limited to the particular embodiments that have just been described, but can be extended to any variant conforming with its spirit.

In particular, the invention is not limited to the generation of a representative population of Internet users, but includes the generation of a representative population of users of any type of terminal (for example computer, television, mobile telephone) connected to a communication network to enable a connection to any type of digital support (for example Wap sites, i-Mode (registered trademark) sites, etc.).

## Claims

1. Method of generating a population representative of the behaviour of a set of users of a communication network starting from a reference population composed of known network users listed in a database, **characterised in that** it comprises steps consisting of:

• for each site or part of site (s) in a set of sites of interest accessible through the network, determining the number of users (N(s)) who connected to the said site or part of site (s) during a given time period (T), using a traffic analysis system connected to the network for analysing traffic on sites of interest;
• for each site or part of site (s), determining a theoretical number ($\widetilde{q}$ (s)) of users such that the ratio between this theoretical number ($\widetilde{q}$ (s)) of users and the number of users (N(s)) who connected to the said site (s) during the given time period (T) is uniform on all sites of interest;
• using processing means connected to the database to generate a population of known network users starting from the reference population so as to minimize the difference between the said theoretical number of users ($\widetilde{q}$ (s)) and the number of users ($q_n$(s)) in the generated population who connected to the site (s) during the time period (T), on all sites or parts of site (s).

2. Method according to the previous claim, **characterised in that** weighting is associated with each known user in the reference population, during the step to generate the population of known network users starting from the reference population.

3. Method according to the previous claim, **characterised in that** the step to generate the population is performed iteratively as follows:

   • the weightings associated with users in the reference population are varied during each iteration;
   • for each iteration, the weightings thus varied are used to generate a new population starting from the reference population,
   • and for each iteration, on all site (s) or parts of site (s), the difference between the said theoretical number ($\widetilde{q}$ (s)) of users and the number ($q_n$(s)) of users in the new population thus generated who connected to the site (s) during the time period (T), is determined; the iterations being continued until the said difference is less than a given threshold, the population generated during the last iteration being considered to be representative of the behaviour of the said set of users.

4. Method according to the previous claim, **characterised in that** the step consisting of determining the number of users (N(s)) who connected to each site or part of site (s) also comprises means of determining the total number of users (N) and the total number of users in the reference population (Q) who connected to the said site or part of site (s) during the given time period (T).

5. Method according to the previous claim, **characterised in that** it also includes before the step to determine the theoretical number ($\widetilde{q}$ (s)) of users on each site (s) a step for defining the representativeness ratio ($\widetilde{R}$) for the representative population to be generated, the said theoretical number ($\widetilde{q}$ (s)) of users being determined for each site or part of site (s) such that the ratio between the theoretical number of users and the total number of users (N (s)) who connected to the site.(s) during the given time period (T) should be uniform for all sites of interest and should be equal to the representativeness ratio ($\widetilde{R}$).

6. Method according to the previous claim, **characterised in that** the new population generated during each iteration is a sub-population of the reference population, the size of which corresponds to the said representativeness ratio ($\widetilde{R}$) with regard to the said total number of users (N), obtained by random drawing of users in the reference population in which the probability of drawing each user in the reference population is equal to the weighting associated with him, each Internet user thus drawn being counted in full in the generated population.

7. Method according to claim 5, **characterised in that** during each iteration, the new generated population is a population with exactly the same size as the reference population in which the weight of each Internet user is equal to the weighting associated with him.

8. Method according to the previous claim, **characterised in that** in iteration rank n, the number of users ($q_n$(s)) in the generated population who connected to site (s) during a given time period (T) is equal to the sum of weightings associated with each of the users in the reference population who actually connected the site (s) during a given time period (T) .

9. Method according to claim 6 or 8, **characterised in that** in iteration rank n, the difference measurement is determined by calculating the variance $v_n$ on all sites of interest using $v_n = \sum_{s} (q_n(s) - \widetilde{q}(s))^2$, where $\widetilde{q}$ (s) is the theoretical number of users for the site s and $q_n(s)$ is the number of users in the population generated in iteration rank n who connected to the site s during the time period considered.

10. Method according to any one of claims 3 to 9, **characterised in that** in each iteration, the weighting associated with a user in the reference population is increased if the user is connected for a given time period to sites for which the number of users $(q(s))$ in the reference population who connected to it is less than the theoretical number $(\tilde{q}(s))$, otherwise the weighting is reduced.

11. Method according to the previous claim, **characterised in that** the weighting $p_n(i)$ associated with user i in the reference population, in rank n of the iteration, is then determined as described in the following equations:

$$p_n(i) = P_{n-1}(i) \frac{1}{1+\frac{B(i)}{S_i}} \quad \text{if } B(i) \geq 0 \quad \text{or} \quad P_n(i) = P_{n-1}(i)(1-\frac{B(i)}{S_i})$$

if B(i) < 0, where

• $p_{n-1}(i)$ is the weighting associated with qualified Internet user i in iteration rank n-1;
• $S_i$ is the number of sites visited by Internet user i during the time period considered,

• and $B(i) = \sum_{s(i)} b(s)$, where s(i) represents sites visited by Internet user i during the period considered, and

$$b(s) = \frac{q_n(s)}{\tilde{q}(s)} - 1 \quad \text{if } q(s) \geq \tilde{q}(s) \quad \text{or} \cdot b(s) = 1 - \frac{\tilde{q}(s)}{q_n(s)}$$

if $q(s) < \tilde{q}(s)$, where $q(s)$ is the number of users in the reference population who connected to the site (s) during the period considered, $\tilde{q}(s)$ is the theoretical number of users for the site s and $q_n(s)$ is the number of users in the generated population in iteration rank n who connected to the site (s) during the period considered.

12. Method according to one of claims 3 to 11, **characterised in that** for the first iteration, the same weighting is associated with each user in the reference population.

13. Method according to one of the previous claims, **characterised in that** it includes a preliminary step to filter traffic data collected by the traffic analysis system, to only consider data related to all users for whom a population representative of the behaviour needs to be generated.

14. Method for determining the profile of a user of a communication network, **characterised in that** it comprises a step to generate a representative population starting from a reference population using the method according to any one of the previous claims.

15. System (100) for generating a population of users of a communication network (200) representative of the behaviour of a set of network users starting from a reference population composed of known network users, **characterised in that** it comprises:

• a server (101) that generates a representative population, which is connected to the network and which includes processing means connected to a database (102) listing known users in the reference population;
• a system (600) analysing traffic on sites of interest, connected to the network (200) and capable of determining the total number of users (N(s)) who connected to the said site or part of site (s) during a given time period (T), for each site or part of site (s) among all sites (300) of interest (301, 302, 303) accessible through the network, and discriminating which of these users are members of the reference population,

in which the processing means are capable of:

• for each site or part of site (s), generating a theoretical number of users ($\tilde{q}$ (s)) such that the ratio between the theoretical number of users ($\tilde{q}$ (s)) and the total number of users (N(s)) who connected to the said site during the given time period (T) is uniform on all sites of interest;
• generating a population of known network users starting from the reference population so as to minimise the difference between the said theoretical number of users ($\tilde{q}$ (s)) and the number of users ($q_n$(s)) in the generated population who connected to the site (s) during the time period (T), for all sites or parts of site (s).

16. System for profiling a user of a communication network, **characterised in that** it includes a system for generating a representative population according to the previous claim.

**Patentansprüche**

1. Verfahren zum Erzeugen einer Population, die für das Verhalten einer Gruppe von Benutzern eines Kommunikationsnetzwerks repräsentativ ist, ausgehend von einer Referenzpopulation, die aus bekannten, in einer Datenbasis aufgeführten Netzwerkbenutzern zusammengesetzt ist, **dadurch gekennzeichnet, dass** es die Schritte bestehend aus umfasst:

Ermitteln, für jede Stelle oder Teil einer Stelle (s) in einer Gruppe von Stellen von Interesse, die über das Netzwerk verfügbar sind, die Anzahl von Benutzern (N(s)), die mit der Stelle oder dem Teil einer Stelle (s) während einer vorgegebenen Zeitdauer (T) verbunden sind, unter Verwendung eines Datenverkehrsanalysesystems, das zum Analysieren von Datenverkehr an Stellen von Interesse mit dem Netzwerk verbunden ist;
Ermitteln für jede Stelle oder Teil einer Stelle (s) einer theoretischen Anzahl ($\tilde{q}$(s)) von Benutzern, so dass das Verhältnis zwischen dieser theoretischen Anzahl ($\tilde{q}$ (s)) von Benutzern und der Anzahl von Benutzern (N(s)), die mit der Stelle (s) während der vorgegebenen Zeitdauer (T) verbunden sind, an allen Stellen von Interesse gleich ist;
Verwenden einer Verarbeitungseinrichtung, die mit der Datenbasis verbunden ist, um eine Population bekannter Netzwerkbenutzer ausgehend von der Referenzpopulation zu erzeugen, um an allen Stellen oder Teilen einer Stelle (s) den Unterschied zwischen der theoretischen Anzahl von Benutzern ($\tilde{q}$(s)) und der Anzahl von Benutzern ($q_n$(s)) in der erzeugten Population zu minimieren, die mit der Stelle (s) während der Zeitdauer (T) verbunden sind.

2. Verfahren nach dem vorherigen Anspruch, **dadurch gekennzeichnet, dass** eine Wichtung jedem bekannten Benutzer in der Referenzpopulation während des Schritts zugeordnet wird, die Population bekannter Netzwerkbenutzer ausgehend von der Referenzpopulation zu erzeugen.

3. Verfahren nach dem vorherigen Anspruch, **dadurch gekennzeichnet, dass** der Schritt, die Population zu erzeugen, wie folgt iterativ durchgeführt wird:

die Benutzern in der Referenzpopulation zugeordneten Wichtungen werden während jeder Iteration variiert;
für jede Iteration werden die so variierten Wichtungen verwendet, um ausgehend von der Referenzpopulation eine neue Population zu erzeugen;
und für jede Iteration wird an allen Stellen (s) oder Teilen einer Stelle (s) der Unterschied zwischen der theoretischen Anzahl ($\tilde{q}$ (s)) von Benutzern und der Anzahl ($q_n$(s)) von Benutzern in der so erzeugten neuen Population, die während der Zeitdauer (T) mit der Stelle (s) verbunden sind, ermittelt;

wobei die Iterationen fortgesetzt werden, bis der genannte Unterschied kleiner als ein vorgegebener Grenzwert ist, wobei die während der letzten Iteration erzeugte Population als für das Verhalten der Gruppe von Benutzern repräsentativ betrachtet wird.

4. Verfahren nach dem vorherigen Anspruch, **dadurch gekennzeichnet, dass** der Schritt, der aus dem Ermitteln der Anzahl von Benutzern (N(s)) besteht, die mit jeder Stelle oder Teil einer Stelle (s) verbunden sind, auch eine Maßnahme umfasst, die Gesamtanzahl von Benutzern (N) und die Gesamtanzahl von Benutzern in der Referenzpopulation (Q) zu ermitteln, die während der vorgegebenen Zeitdauer (T) mit der Stelle oder dem Teil einer Stelle (s) verbunden sind.

**5.** Verfahren nach dem vorherigen Anspruch, **dadurch gekennzeichnet, dass** es vor dem Schritt, die theoretische Anzahl ($\tilde{q}$ (s)) von Benutzern an jeder Stelle (s) zu ermitteln, auch einen Schritt umfasst, das Repräsentativitätsverhältnis ($\tilde{R}$) für die zu erzeugende repräsentatitive Population zu definieren, wobei die theoretische Anzahl ($\tilde{q}$ (s)) von Benutzern für jede Stelle oder Teil einer Stelle (s) so ermittelt wird, dass das Verhältnis zwischen der theoretischen Anzahl von Benutzern und der Gesamtanzahl von Benutzern (N(s)), die während der vorgegebenen Zeitdauer (T) mit der Stelle (s) verbunden sind, für alle Stellen von Interesse gleich sein sollte und dem Repräsentativitätsverhältnis ($\tilde{R}$) entsprechen sollte.

**6.** Verfahren nach dem vorherigen Anspruch, **dadurch gekennzeichnet, dass** die während jeder Iteration erzeugte neue Population eine Unterpopulation der Referenzpopulation ist, deren Größe dem Repräsentativitätsverhältnis ($\tilde{R}$) im Verhältnis zu der Gesamtanzahl von Benutzern (N) entspricht, erhalten durch ein zufälliges Wählen von Benutzern in der Referenzpopulation, in der die Wahrscheinlichkeit, jeden Benutzer in der Referenzpopulation zu wählen, gleich der diesem zugeordneten Wichtung ist, wobei jeder so gewählte Internet-Benutzer vollständig in der erzeugten Population gezählt wird.

**7.** Verfahren nach Anspruch 5, **dadurch gekennzeichnet, dass** während jeder Iteration die neu erzeugte Population eine Population mit genau der gleichen Größe wie die Referenzpopulation ist, in der das Gewicht jedes Internet-Benutzers gleich der diesem zugeordneten Wichtung ist.

**8.** Verfahren nach dem vorherigen Anspruch, **dadurch gekennzeichnet, dass** bei einer Iterationsstufe n die Anzahl von Benutzern ($q_n$(s)) in der erzeugten Population, die mit der Stelle (s) während der vorgegebenen Zeitdauer (T) verbunden sind, gleich der Summe von Wichtungen ist, die jedem der Benutzer in der Referenzpopulation zugeordnet sind, die tatsächlich während einer vorgegebenen Zeitdauer (T) mit der Stelle (s) verbunden sind.

**9.** Verfahren nach Anspruch 6 oder 8, **dadurch gekennzeichnet, dass** bei einer Iterationsstufe n die Differenzmessung ermittelt wird, indem die Varianz $v_n$ an allen Stellen von Interesse unter Verwendung von

$$v_n = \sum_s (q_n(s) - \tilde{q}(s))^2 \quad \text{berechnet wird,}$$

wobei $\tilde{q}$ (s) die theoretische Anzahl von Benutzern für die Stelle s ist und $q_n$(s) die Anzahl von Benutzern in der bei einer Iterationsstufe n erzeugten Population ist, die während der betrachteten Zeitdauer mit der Stelle s verbunden sind.

**10.** Verfahren nach einem der Ansprüche 3 bis 9, **dadurch gekennzeichnet, dass** bei jeder Iteration die einem Benutzer in der Referenzpopulation zugeordnete Wichtung vergrößert wird, wenn der Benutzer für eine vorgegebene Zeitdauer mit Stellen verbunden ist, für die die Anzahl an Benutzern (q(s)) in der Referenzpopulation, die mit diesen verbunden sind, kleiner als die theoretische Anzahl ($\tilde{q}$ (s)) ist, wobei ansonsten die Wichtung verkleinert wird.

**11.** Verfahren nach dem vorherigen Anspruch, **dadurch gekennzeichnet, dass** die einem Benutzer i in der Referenzpopulation bei einer Stufe n der Iteration zugeordnete Wichtung $p_n$(i) dann wie in den folgenden Gleichungen beschrieben ermittelt wird:

$$P_n(i) = P_{n-1}(i) \frac{1}{1 + \dfrac{B(i)}{S_i}} \, ,$$

wenn B (i) $\geq$0 oder

$$P_n(i) = P_{n-1}(i) \left( 1 - \frac{B(i)}{S_i} \right) \, ,$$

wenn B (i) <0,
wobei

$p_{n-1}(1)$ die in einer Iterationsstufe n-1 einem qualifizierten Internet-Benutzer i zugeordnete Wichtung ist;
$S_i$ die Anzahl an Stellen ist, die während der betrachteten Zeitdauer von einem Internet-Benutzer i besucht wird,

und $B(i)) = \sum\limits_{s(i)} b(s)$, wobei s(i) von einem Internet-Benutzer i während der betrachteten Dauer besuchte Stellen angibt,

$$b(s) = \frac{q_n(s)}{\widetilde{q}(s)} - 1,$$

wenn $q(s) \geq \widetilde{q}(s)$ oder

$$b(s) = 1 - \frac{\widetilde{q}(s)}{q_n(s)},$$

wenn $q(s) < \widetilde{q}(s)$

wobei q(s) die Anzahl von Benutzern in der Referenzpopulation ist, die während der betrachteten Dauer mit der Stelle (s) verbunden sind, $\widetilde{q}(s)$ die theoretische Anzahl von Benutzern für die Stelle s ist und $q_n(s)$ die Anzahl von Benutzern in der erzeugten Population bei einer Iterationsstufe n ist, die während der betrachteten Dauer mit der Stelle (s) verbunden sind.

12. Verfahren nach einem der Ansprüche 3 bis 11, **dadurch gekennzeichnet, dass** für die erste Iteration jedem Benutzer in der Referenzpopulation die gleiche Wichtung zugeordnet wird.

13. Verfahren nach einem der vorherigen Ansprüche, **dadurch gekennzeichnet, dass** es einen vorherigen Schritt umfasst, von dem Datenverkehrsanalysesystem gesammelte Datenverkehrsdaten zu filtern, um nur Daten zu berücksichtigen, die alle Benutzer betreffen, für die eine für das Verhalten repräsentative Population erzeugt werden soll.

14. Verfahren zum Ermitteln des Profils eines Benutzers eines Kommunikationsnetzwerks, **dadurch gekennzeichnet, dass** es einen Schritt umfasst, eine repräsentative Population ausgehend von einer Referenzpopulation unter Verwendung des Verfahrens gemäß einem der vorherigen Ansprüche zu erzeugen.

15. System (100) zum Erzeugen einer Population von Benutzern eines Kommunikationsnetzwerks (200), die für das Verhalten einer Gruppe von Netzwerkbenutzern repräsentativ ist, ausgehend von einer aus bekannten Netzwerkbenutzern zusammengesetzten Referenzpopulation, **dadurch gekennzeichnet, dass** es umfasst:

einen Server (101), der eine repräsentative Population erzeugt, der mit dem Netzwerk verbunden ist und der eine Verarbeitungseinrichtung aufweist, die mit einer Datenbasis (102) verbunden ist, die bekannte Benutzer in der Referenzpopulation aufführt;
ein System (600), das Datenverkehr an Stellen von Interesse analysiert, das mit dem Netzwerk (200) verbunden ist und das die Gesamtanzahl von Benutzern (N(s)), die mit der Stelle oder Teil einer Stelle (s) während einer vorgegebenen Zeitdauer (T) verbunden sind, für jede Stelle oder Teil einer Stelle (s) von allen Stellen (300) von Interesse (301, 302, 303), die über das Netzwerk erreichbar sind, zu ermitteln und zu unterscheiden vermag, welche dieser Benutzer Mitglieder der Referenzpopulation sind,
bei dem die Verarbeitungseinrichtung vermag:

Erzeugen für jede Stelle oder Teil einer Stelle (s) einer theoretischen Anzahl von Benutzern ($\widetilde{q}(s)$), so dass das Verhältnis zwischen der theoretischen Anzahl von Benutzern q(s) und der Gesamtanzahl von Benutzern (N(s)), die während der vorgegebenen Zeitdauer (T) mit der Stelle verbunden sind, an allen Stellen von Interesse gleich ist;

Erzeugen einer Population von bekannten Netzwerkbenutzern ausgehend von der Referenzpopulation, um den Unterschied zwischen der theoretischen Anzahl von Benutzern ($\widetilde{q}$ (s) und der Anzahl von Benutzern (q(n(s)) in der erzeugten Population, die während der Zeitdauer (T) mit der Stelle (s) verbunden sind, für alle Stellen oder Teile einer Stelle (s) zu minimieren.

16. System zum Erstellen eines Profils eines Benutzers eines Kommunikationsnetzwerks, **dadurch gekennzeichnet, dass** es ein System zum Erzeugen einer repräsentativen Population gemäß dem vorherigen Anspruch aufweist.

**Revendications**

1. Procédé d'élaboration d'une population représentative d'un ensemble d'utilisateurs d'un réseau de communication à partir d'une population de référence constituée d'utilisateurs connus du réseau recensés dans une base de données, **caractérisé en ce qu'**il comporte les étapes consistant à :

   • déterminer, pour chaque site ou partie de site (s) d'un ensemble de sites d'intérêt accessibles par le réseau, par un système connecté au réseau d'analyse du trafic sur les sites d'intérêt, le nombre d'utilisateurs (N(s)) s'étant connectés audit site ou partie de site (s) pendant une période de temps donnée (T),
   • établir, pour chaque site ou partie de site (s), un nombre théorique ($\widetilde{q}$ (s)) d'utilisateurs tel que le rapport entre ce nombre théorique ($\widetilde{q}$ (s)) d'utilisateurs et le nombre d'utilisateurs ($N(s)$) s'étant connectés audit site (s) pendant la période de temps donnée (T) soit uniforme sur l'ensemble des sites d'intérêt,
   • élaborer, par des moyens de traitement reliés à la base de données, une population d'utilisateurs connus du réseau à partir de la population de référence de manière à minimiser, sur l'ensemble des sites ou parties de site (s), l'écart entre ledit nombre théorique ($\widetilde{q}$ (s)) d'utilisateurs et le nombre $(q_n(s))$ d'utilisateurs de la population élaborée qui se sont connectés au site (s) pendant la période de temps (T).

2. Procédé selon la revendication précédente, **caractérisé en ce que** lors de l'étape d'élaboration de la population d'utilisateurs connus du réseau à partir de la population de référence, une pondération est associée à chaque utilisateur connu de la population de référence.

3. Procédé selon la revendication précédente, **caractérisé en ce que** l'étape d'élaboration de la population est réalisée de manière itérative :

   • en faisant varier, à chaque itération, les pondérations associées aux utilisateurs de la population de référence,
   • en élaborant, à chaque itération, à l'aide des pondérations ainsi variées, à partir de la population de référence, une nouvelle population,
   • et en déterminant, à chaque itération, sur l'ensemble des sites ou parties de site (s), l'écart entre ledit nombre théorique ($\widetilde{q}$ (s)) d'utilisateurs et le nombre $(q_n(s))$ d'utilisateurs de la nouvelle population ainsi élaborée qui se sont connectés au site (s) pendant la période de temps (T),

   les itérations étant poursuivies tant que ledit écart n'est pas inférieur à un seuil donné, la population élaborée à la dernière itération étant considérée comme étant représentative du comportement dudit ensemble d'utilisateurs.

4. Procédé selon la revendication précédente, **caractérisé en ce que** l'étape de détermination du nombre d'utilisateurs (N(s)) s'étant connectés à chaque site ou partie de site (s) comprend également la détermination du nombre total d'utilisateurs (N) et du nombre total d'utilisateurs de la population de référence (Q) qui se sont connectés sur l'un au moins desdits sites, pendant la période de temps donnée (T).

5. Procédé selon la revendication précédente, **caractérisé en ce que**, préalablement à l'étape d'établissement du nombre théorique d'utilisateurs ($\widetilde{q}$ (s)) sur chaque site (s), il comporte en outre une étape de définition du taux de représentativité ($\widetilde{R}$) de la population représentative à élaborer, ledit nombre théorique d'utilisateurs ($\widetilde{q}$ (s)) étant établi, pour chaque site ou partie de site (s), de manière à ce que son rapport avec le nombre total d'utilisateurs ($N(s)$) s'étant connectés au site (s) pendant la période de temps donnée (T) soit uniforme sur l'ensemble des sites d'intérêt, égal audit taux de représentativité ($\widetilde{R}$).

6. Procédé selon la revendication précédente, **caractérisé en ce que**, à chaque itération, la nouvelle population élaborée est une sous-population de la population de référence, dont la taille respecte ledit taux de représentativité ($\widetilde{R}$) vis-à-vis dudit nombre total d'utilisateurs (N), obtenue par un tirage au sort d'utilisateurs de la population de référence selon lequel chaque utilisateur de la population de référence dispose d'une probabilité de tirage égale à la pondération qui lui est associée, chaque internaute ainsi tiré comptant intégralement dans la population élaborée.

7. Procédé selon la revendication 5, **caractérisé en ce que**, à chaque itération, la nouvelle population élaborée est une population de taille identique à la population de référence dans laquelle chaque internaute pèse la pondération qui lui est associée.

8. Procédé selon la revendication précédente, **caractérisé en ce que**, au rang n de l'itération, le nombre $(q_n(s))$ d'utilisateurs de la population élaborée s'étant connectés à un site (s) pendant la période de temps (T) est égal à la somme des pondérations associées à chacun des utilisateurs de la population de référence s'étant effectivement connectés au site (s) pendant la période de temps (T).

9. Procédé selon l'une des revendications 6 ou 8, **caractérisé en ce que**, au rang n de l'itération, la mesure d'écart est réalisée par le calcul de la variance $v_n$ sur l'ensemble des sites d'intérêt selon $v_n = \sum_s (q_n(s) - \tilde{q}(s))^2$ , où $\tilde{q}(s)$ désigne le nombre théorique d'utilisateurs pour le site s et $q_n(s)$ le nombre d'utilisateurs de la population élaborée au rang n de l'itération s'étant connectés au site s pendant la période considérée.

10. Procédé selon l'une des revendications 3 à 9, **caractérisé en ce que**, à chaque itération, la pondération associée à un utilisateur de la population de référence est augmentée si celui-ci s'est connecté, pendant la période de temps donnée, sur des sites pour lesquels le nombre $(q(s))$ d'utilisateurs de la population de référence s'y étant connectés est inférieur au nombre théorique $(\tilde{q}(s))$, la pondération étant diminuée dans le cas contraire.

11. Procédé selon la revendication précédente, **caractérisé en ce que** la pondération $p_n(i)$ associée à un utilisateur i de la population de référence, au rang n de l'itération, est déterminée comme indiqué dans les équations ci-après :

$$p_n(i) = p_{n-1}(i)\frac{1}{1+\dfrac{B(i)}{S_i}} \quad si\ B(i) \geq 0 \quad \text{ou} \quad p_n(i) = p_{n-1}(i)(1-\frac{B(i)}{S_i}) \quad si\ B(i) < 0 ,$$

dans lesquelles :

• $p_{n-1}(i)$ est la pondération associée à l'internaute qualifié i, au rang n-1 de l'itération,
• $S_i$ est le nombre de sites auxquels l'internaute i s'est connecté pendant la période de temps considérée,

• et $B(i) = \sum_{s(i)} b(s)$ , où s(i) représente les sites sur lesquelles ledit utilisateur i s'est connecté pendant la période considérée et

$$b(s) = \frac{q_n(s)}{\tilde{q}(s)} - 1 \quad si\ q(s) \geq \tilde{q}(s) \quad \text{ou} \quad b(s) = 1 - \frac{\tilde{q}(s)}{q_n(s)} \quad si\ q(s) < \tilde{q}(s) , \quad q(s)$$

désignant le nombre d'utilisateurs de la population de référence s'étant connectés au site s pendant la période considérée, $\tilde{q}(s)$ le nombre théorique d'utilisateurs pour le site s et $q_n(s)$ le nombre d'utilisateurs de la population élaborée au rang n de l'itération s'étant connectés au site s pendant la période considérée.

12. Procédé selon l'une des revendications 3 à 11, **caractérisé en ce que** lors de la première itération, on associe à chaque utilisateur de la population de référence une pondération identique.

13. Procédé selon l'une des revendications précédentes, **caractérisé en ce qu'**il comporte une étape préliminaire de filtrage des données de trafic collectées par le système d'analyse du trafic, de manière à ne considérer que les données concernant l'ensemble d'utilisateurs pour lequel une population représentative du comportement est à élaborer.

**14.** Procédé de détermination du profil d'un utilisateur d'un réseau de communication **caractérisé en ce qu'**il comporte une étape d'élaboration d'une population représentative à partir d'une population de référence mettant en oeuvre le procédé selon l'une quelconque des revendications précédentes.

**15.** Système (100) d'élaboration d'une population d'utilisateurs d'un réseau (200) de communication représentative d'un ensemble d'utilisateurs du réseau à partir d'une population de référence constituée d'utilisateurs connus du réseau **caractérisé en ce qu'**il comprend :

  • un serveur (101) d'élaboration d'une population représentative connecté au réseau et incluant des moyens de traitement reliés à une base de données (102) recensant les utilisateurs connus de la population de référence,
  • un système (600) d'analyse du trafic sur des sites d'intérêt connecté au réseau (200) et apte à déterminer, pour chaque site ou partie de site (s) de l'ensemble (300) de sites d'intérêt (301, 302, 303) accessibles par le réseau, le nombre total d'utilisateurs (N(s)) s'étant connectés audit site ou partie de site (s) pendant une période de temps donnée (T) et à discriminer parmi ces utilisateurs, ceux qui sont membres de la population de référence,

dans lequel les moyens de traitement sont aptes à :

  • établir, pour chaque site ou partie de site (s), un nombre théorique ($\tilde{q}$(s)) d'utilisateurs tel que le rapport entre ce nombre théorique ($\tilde{q}$(s)) d'utilisateurs et le nombre total d'utilisateurs ($N$(s)) s'étant connectés audit site (s) pendant la période de temps donnée (T) soit uniforme sur l'ensemble des sites d'intérêt,
  • élaborer une population d'utilisateurs connus du réseau à partir de la population de référence de manière à minimiser, sur l'ensemble des sites ou parties de site (s), l'écart entre ledit nombre théorique ($\tilde{q}$(s)) d'utilisateurs et le nombre $(q_n(s))$ d'utilisateurs de la population élaborée qui se sont connectés au site (s) pendant la période de temps (T).

**16.** Système de détermination du profil d'un utilisateur d'un réseau de communication, **caractérisé en ce qu'**il intègre un système d'élaboration d'une population représentative selon la revendication précédente.

FIG.1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• WO 0233626 A